# EUROPÄISCHE PATENTANMELDUNG

(11) **EP 4 810 873 A1**
(43) Veröffentlichungstag der Anmeldung: **23.09.2026**
(21) Anmeldenummer: 26162550.3
(22) Anmeldetag: 05.03.2026
(51) Int. Cl.: F24S 25/11, H02S 20/24

(54) **UNTERKONSTRUKTION UND SOLARMODULSYSTEM**

(30) Priorität: 18.03.2025 DE 202025101457 U
(71) Anmelder: Protect-proof Kunststoff-Vertriebs GmbH, 26133 Oldenburg (DE)
(72) Erfinder: Gernot Harms, 26133 Oldenburg (DE)
(74) Vertreter: Jabbusch, Matthias

(57) **Zusammenfassung**

Bei einer Unterkonstruktion (2) für Solarpaneele (7), insbesondere flexible Solarpaneele, aufweisend parallel zueinander angeordnete Auflageschienen (1) ist vorgesehen, dass die Auflageschienen aus einem geschäumten Kunststoff gefertigt sind.

Mit dieser Unterkonstruktion ist ein vielfältiger Einsatz der Solarpaneele ermöglicht.

## Beschreibung

Die Erfindung betrifft eine Unterkonstruktion für Solarpaneele, insbesondere flexible Solarpaneele, aufweisend parallel zueinander angeordnete Auflageschienen und ein Solarmodulsystem aufweisend wenigstens ein Solarpaneel, insbesondere wenigstens ein flexibles Solarpaneel.

Um Solarmodule auch an Orten mit zum Beispiel geringer Traglast einsetzen zu können und damit deren Anwendungsbereiche ausweiten zu können, gibt es Bestrebungen deren Gewicht zu reduzieren. Ein Ergebnis dieser Bestrebungen ist, das bewährte kristalline Silizium-Solarzellen auf proprietäre Polymerverbundwerkstoffe aufgebracht werden. Diese Solarpaneele zeichnen sich durch eine geringe Schichtdicke und deren Biegsamkeit aus. Die flexiblen Eigenschaften werden dabei auch durch deren rahmenlose Bauweise erreicht.

An deren Einsatzort führt die rahmenlose Bauweise jedoch dazu, dass die Solarpaneele entweder direkt auf einen vorbestimmten Untergrund aufgelegt werden müssen oder durch eine Unterkonstruktion versteift werden müssen. Eine Unterkonstruktion ist dabei insbesondere erforderlich, wenn die Solarpaneele ansonsten in sich stauendem Wasser stehen würden oder der Untergrund zu uneben ist, um die Solarpaneele unmitttelbar auf diesem anordnen zu können. Jedoch sind diese aus PVC-Vierkantrohren gebildeten, bekannten Unterkonstruktionen relativ unflexibel einsetzbar und ermöglichen z. B. keine geneigte Anordnung der Solarpaneele zu deren Untergrund bzw. Konstruktionsfläche.

Aufgabe der Erfindung ist es daher eine entsprechende Unterkonstruktion weiterzuentwickeln, die einen vielfältigeren Einsatz der Solarpaneele ermöglicht.

Gelöst wird die Aufgabe mit den Merkmalen der Unterkonstruktion gemäß Anspruch 1 und den Merkmalen des Solarmodulsystems gemäß Anspruch 11. Weiterbildungen und vorteilhafte Ausgestaltungen der Erfindung sind in den jeweils nachgeordneten Unteransprüchen angegeben.

Die Unterkonstruktion für Solarpaneele, insbesondere flexible Solarpaneele, aufweisend parallel zueinander angeordnete Auflageschienen, zeichnet sich erfindungsgemäß dadurch aus, dass die Auflageschienen aus einem geschäumten Kunststoff gefertigt sind. Die geschäumten Auflageschienen ermöglichen gegenüber den bekannten PVC-Vierkantrohren eine weitere Gewichtsreduktion und unterstützen somit den Leichtbau der Solarmodule bei Verwendung einer Unterkonstruktion. Zudem haben die geschäumten Auflageschienen den Vorteil, dass diese in nahezu beliebigen Formen gepresst werden können oder entsprechend zugeschnitten werden können.

Gemäß einer ersten Weiterbildung können die Auflageschienen daher zumindest abschnittsweise keilförmig ausgebildet sein und wenigstens eine zu einer ebenen Konstruktionsfläche der Unterkonstruktion geneigte Auflagefläche ausbilden. Auf geneigte Solarpaneele auftreffender Niederschlag wird entsprechend schneller abgeführt, wodurch eine höhere Energieausbeute sichergestellt ist. Zudem ist eine Ausrichtung zur Sonne hin möglich.

Hier ist in weiterer Ausgestaltung vorgesehen, dass die Auflagefläche der Auflageschienen um wenigstens 3° zu der Konstruktionsfläche geneigt ist, insbesondere zwischen 3° und 8° zu der Konstruktionsfläche geneigt ist, insbesondere zwischen 4° und 6° zu der Konstruktionsfläche geneigt ist, insbesondere genau um 5° zu der Konstruktionsfläche geneigt ist. Angepasst an die Solarpaneele können die Auflageschienen somit zum Beispiel eine Höhe zwischen 100 mm und 20 mm aufweisen.

Nach einer nächsten Weiterbildung sind den Auflageschienen Queraussteifungen zugeordnet, die wenigstens zwei der Auflageschienen miteinander verbinden. Die Auflageschienen können damit in größeren Abständen zueinander angeordnet werden, ohne dass auf diese aufzubringende flexible Solarpaneele zwischen den Auflageschienen durchhängen.

Um die Queraussteifungen an den Auflageschienen in vorbestimmter Weise zu positionieren, weisen diese vorteilhafterweise Schlitze auf, in denen die Queraussteifungen eingesteckt sind. Mit den Schlitzen korrespondierend können die Queraussteifungen in weiterer Ausgestaltung durch zueinander angewinkelte Plattenabschnitte gebildet sein, von denen ein erster Plattenabschnitt in den jeweils zugeordneten Schlitz der Auflageschienen eingesteckt ist und ein zweiter Plattenabschnitt bestimmungsgemäß eine Auflagefläche für die Solarpaneele ausbildet. Die Schlitze sind dementsprechend fluchtend zueinander anzuordnen, so das mit einer Queraussteifung mehrere Auflageschienen verbunden werden können.

In weiterer Ausgestaltung ist zudem vorgesehen, dass die Queraussteifungen rechtwinklig zu den Auflageschienen ausgerichtet sind. Queraussteifungen und Auflageschienen bilden damit ein gleichmäßiges Raster aus Rechtecken, welches einfach zu berechnen ist und eine gute Abstützung der Solarpaneele über deren Flächenausdehnung gewährleistet.

Nach einer nächsten Weiterbildung sind an den Queraussteifungen Kabelführungen ausgebildet. Zu verlegende Kabel der Solarmodule sind somit unmittelbar unterhalb der auf der Unterkonstruktion anzuordnenden Solarpaneele angeordnet. Geeignete Kabelführungen können bspw. Kabelklemmen oder Clips sein, die innenseitig an den winklig zueinander angeordneten Plattenabschnitten angeordnet sind. Weiterhin können aber auch Kabelbinder durch Durchbrüche der Queraussteifungen geführt sein.

Bevorzugtes Material der Auflageschienen ist geschäumtes Polyethylenterephthalat, dass günstig in beliebige Formen gebracht werden kann und zudem immer wieder neu aus Reststoffen, z. B. alten PET-Flaschen, recycelt werden kann. Zudem ist Polyethylenterephthalat schwer entflammbar. Für die Queraussteifungen ist in weiterer Ausgestaltung ein Hartkunststoff, z. B. PVC, vorgesehen. Alternativ können die Queraussteifungen auch aus einem metallischen Werkstoff gebildet sein.

Weiter betrifft die Erfindung auch ein Solarmodulsystem aufweisend wenigstens ein Solarpaneel, insbesondere wenigstens ein flexibles Solarpaneel. Dieses Solarmodulsystem zeichnet sich dadurch aus, dass das wenigstens eine Solarpaneel auf eine vorbeschriebene Unterkonstruktion aufgebaut ist. Die Solarpaneele können damit auf unterschiedliche Flachdächer mit oder ohne Sicken oder dergleichen aufgebaut werden, wobei sowohl die Solarmodule als auch deren Verkabelung vor Staunässe geschützt sind.

Nach einer Weiterbildung des Solarmodulsystems ist das wenigstens eine Solarpaneel mit der Unterkonstruktion verklebt. In Kombination mit den geschäumten Auflageschienen sind die Solarpaneele damit elektrisch von deren Untergrund bzw. Konstruktionsfläche entkoppelt. Durch eine herstellungsbedingt rauhe Oberfläche der geschäumten Auflageschiene ist zudem eine gute Haftung eines verwendeten Klebers sichergestellt. Insbesondere ist das wenigstens eine Solarpaneel sowohl mit den Auflageschienen als auch mit den Queraussteifungen verklebt.

Ebenso ist nach einer Weiterbildung zischen dem die Konstruktionsfläche bildenden Untergrund und der Unterkonstruktion eine Verklebung vorgesehen. Beide Verklebungen werden dabei vorteilhafterweise mit dem gleichen Kleber durchgeführt, der in weiterer Ausgestaltung eine dauerelastische Verbindung sowohl zwischen dem Untergrund und der Unterkonstruktion als auch der Unterkonstruktion und den Solarpaneelen gewährleistet. Nach einer Weiterbildung wird jeweils 1-komponentiger PU-Kleber verwendet, insbesondere der gleiche 1-komponentige PU-Kleber verwendet.

Ein Ausführungsbeispiel der Erfindung, aus dem sich weitere erfindungswesentliche Merkmale ergeben können, ist in der Zeichnung dargestellt. Gleiche Teile sind dabei in allen Figuren der Zeichnung mit gleichen Bezugszeichen versehen. Es zeigen:
- Fig. 1:: eine erste perspektivische Darstellung des Aufbaus eines erfindungsgemäßen Solarmodulsystems;
- Fig. 2:: eine zweite perspektivische Darstellung des Aufbaus des Solarmodulsystems gemäß Fig. 1;
- Fig. 3:: eine dritte perspektivische Darstellung des Aufbaus des Solarmodulsystems gemäß Fig. 1 und 2;
- Fig. 4:: eine vierte perspektivische Darstellung des aufgebauten Solarmodulsystems gemäß Fig. 1 bis 3; und
- Fig. 5:: eine fünfte perspektivische Darstellung des Aufbaus des Solarmodulsystems gemäß Fig. 1 bis 4;

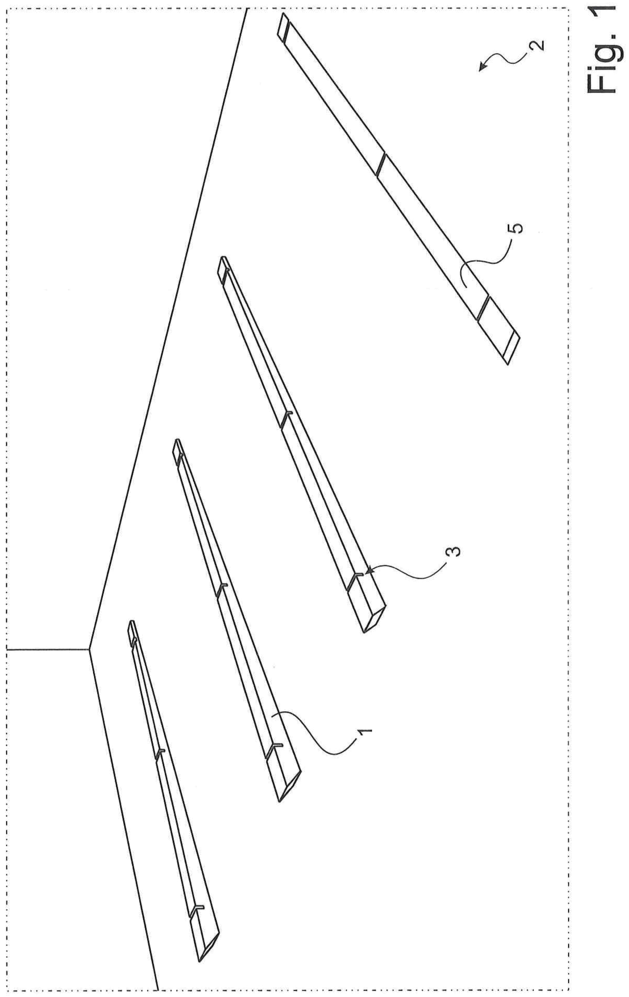

Fig. 1 zeigt mit Abstand parallel zueinander angeordnete Auflageschienen 1 einer erfindungsgemäßen Unterkonstruktion 2. Jede der Auflageschienen 1 weist drei vertikale Schlitze 3 auf, wobei die Schlitze 3 benachbarter Auflageschienen 1 jeweils zueinander fluchtend ausgerichtet sind. Die Schlitze 3 einer der Auflageschienen 1 sind gleichmäßig über deren Länge verteilt. Die Auflageschienen 1 weisen in Längserstreckung zudem ein Gefälle von insbesondere 5° zwischen einer nach oben weisenden Auflagefläche 5 mit eingebrachten Schlitzen 3 und einer gegenüberliegend nach unten weisenden Konstruktionsfläche auf.

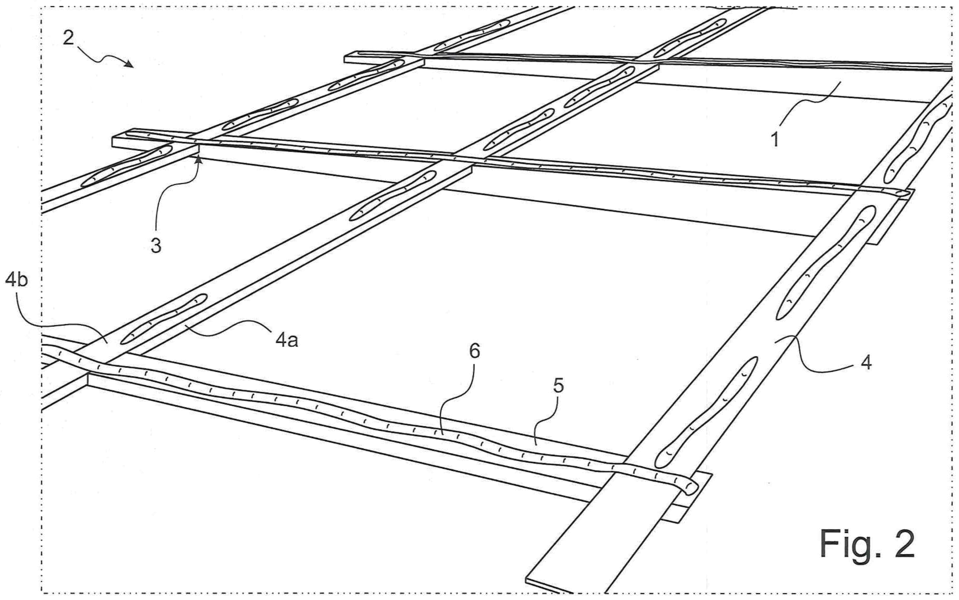

In Fig. 2 sind Queraussteifungen 4 mit einem jeweils ersten zweier rechtwinklig zueinander angeordneter Plattenabschnitte 4a in die Schlitze 3 eingesteckt. Eine Queraussteifung 4 erstreckt sich dabei über alle vier Auflageschienen 1 und liegt mit deren zweitem Plattenabschnitt 4b auf Auflageflächen 5 der Auflageschienen 1 auf. Sowohl auf den Plattenabschnitten 4b der Queraussteifungen 4 als auch den Auflageflächen 5, wurde sichtseitig zudem ein 1-komponentiger PU-Kleber 6 aufgetragen.

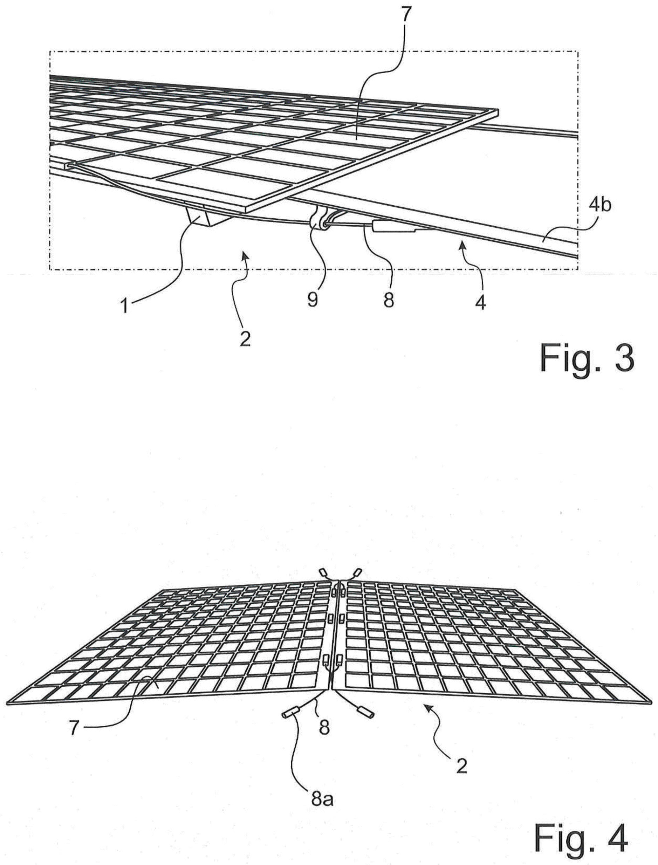

Gemäß Fig. 3 wurden die Plattenabschnitte 4b und die Auflageflächen 5 mit einem aufgelegten Solarpaneel 7 verklebt. Ein Kabel 8 zum Anschluss des Solarpaneels 7 an ein Stromnetz wurde mittels einer Kabelklemme 9 als Kabelführung unterhalb der Queraussteifung 4 an den einander zugewandten Seiten der Plattenabschnitte 4a, 4b befestigt.

Aus Fig. 4 ist ersichtlich wie zwei Solarpaneele 7 zueinander auf einem Untergrund anzuordnen sind, wobei die Solarpaneele 7 in einander entgegengesetzte Richtung, insbesondere in Ost-West-Ausrichtung, geneigt sind. Des Weiteren sind aus Fig. 4 Kabelanschlüsse 8a der Kabel 8 ersichtlich, die unterhalb der Solarpaneele 7 an ein Stromnetz anzubinden sind.

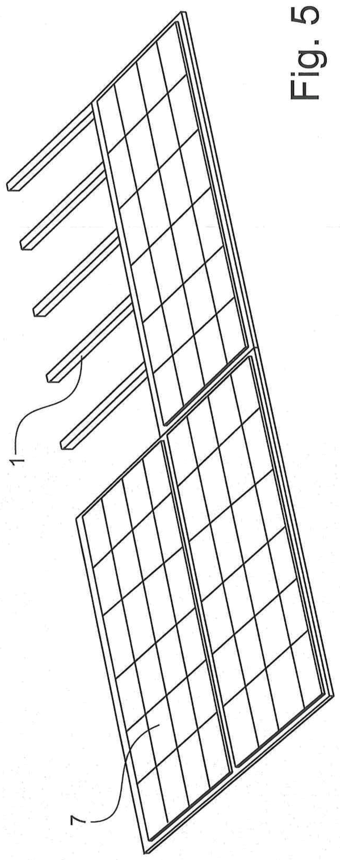

Fig. 5 offenbart ein Paket aus vier Solarpaneelen 7, wie sie auf einem Untergrund anzuordnen sind. Zwischen solchen Paketen sind jeweils Wartungs- und Montagegänge vorzusehen.

## Patentansprüche

1. Unterkonstruktion (2) für Solarpaneele (7), insbesondere flexible Solarpaneele (7), aufweisend parallel zueinander angeordnete Auflageschienen (1),
**dadurch gekennzeichnet,**
**dass** die Auflageschienen (1) aus einem geschäumten Kunststoff gefertigt sind.

2. Unterkonstruktion (2) nach Anspruch 1, **dadurch gekennzeichnet, dass** die Auflageschienen (1) zumindest abschnittsweise keilförmig ausgebildet sind und wenigstens eine zu einer ebenen Konstruktionsfläche der Unterkonstruktion (2) geneigte Auflagefläche (5) ausbilden.

3. Unterkonstruktion (2) nach einem der Ansprüche 1 oder 2, **dadurch gekennzeichnet, dass** die Auflagefläche (5) der Auflageschienen (1) um wenigstens 3° zu der Konstruktionsfläche geneigt ist, insbesondere zwischen 3° und 8° zu der Konstruktionsfläche geneigt ist, insbesondere zwischen 4° und 6° zu der Konstruktionsfläche geneigt ist, insbesondere genau um 5° zu der Konstruktionsfläche geneigt ist.

4. Unterkonstruktion (2) nach einem der Ansprüche 1 bis 3, **dadurch gekennzeichnet, dass** den Auflageschienen (1) Queraussteifungen (4) zugeordnet sind, die wenigstens zwei der Auflageschienen (1) miteinander verbinden.

5. Unterkonstruktion (2) nach Anspruch 4, **dadurch gekennzeichnet, dass** die Auflageschienen (1) Schlitze (3) aufweisen, in denen die Queraussteifungen (4) eingesteckt sind.

6. Unterkonstruktion (2) nach Anspruch 5, **dadurch gekennzeichnet, dass** die Queraussteifungen (4) durch zueinander angewinkelte Plattenabschnitte (4a, 4b) gebildet sind, von denen ein erster Plattenabschnitt (4a) in den jeweils zugeordneten Schlitz (3) der Auflageschienen (1) eingesteckt ist und ein zweiter Plattenabschnitt (4b) bestimmungsgemäß eine Auflagefläche für die Solarpaneele (7) ausbildet.

7. Unterkonstruktion (2) nach einem der Ansprüche 4 bis 6, **dadurch gekennzeichnet, dass** die Queraussteifungen (4) rechtwinklig zu den Auflageschienen (1) ausgerichtet sind.

8. Unterkonstruktion (2) nach einem der Ansprüche 4 bis 7, **dadurch gekennzeichnet, dass** an den Queraussteifungen (4) Kabelführungen ausgebildet sind.

9. Unterkonstruktion (2) nach einem der Ansprüche 1 bis 8, **dadurch gekennzeichnet, dass** die Auflageschienen (1) aus geschäumtem Polyethylenterephthalat bestehen.

10. Unterkonstruktion (2) nach einem der Ansprüche 4 bis 8, **dadurch gekennzeichnet, dass** die Queraussteifungen (4) aus einem Hartkunststoff bestehen.

11. Solarmodulsystem aufweisend wenigstens ein Solarpaneel (7), insbesondere wenigstens ein flexibles Solarpaneel (7),
**dadurch gekennzeichnet,**
**dass** das wenigstens eine Solarpaneel (7) auf eine Unterkonstruktion (2) nach einem der Ansprüche 1 bis 10 aufgebaut ist.

12. Solarmodulsystem nach Anspruch 11, **dadurch gekennzeichnet, dass** das wenigstens eine Solarpaneel (7) mit der Unterkonstruktion (2) verklebt ist.

13. Solarmodulsystem nach Anspruch 12, **dadurch gekennzeichnet, dass** das wenigstens eine Solarpaneel (7) sowohl mit den Auflageschienen (1) als auch mit den Queraussteifungen (4) verklebt ist.

14. Solarmodulsystem nach einem der Ansprüche 11 bis 13, **dadurch gekennzeichnet, dass** die Unterkonstruktion (2) mit einem die Konstruktionsfläche bildenden Untergrund verklebt ist.
